# EUROPEAN PATENT SPECIFICATION

(11) **EP 0 561 065 B1**
(45) Date of publication and mention of the grant of the patent: **25.02.1998**
(21) Application number: 92203679.3
(22) Date of filing: 27.11.1992
(51) Int. Cl.: B01D 53/34, C01B 31/18, A01G 7/02, A01G 9/18

(54) **Method and apparatus for producing a gas containing CO2, in particular for CO2-fertilization in the greenhouse horticulture.**
Verfahren und Vorrichtung zur Herstellung eines CO2 enthaltenden Gases, insbesondere für CO2-Düngung im Treibhaus-Gartenbau
Procédé et dispositif pour la production d'un gaz contenant du CO2, en particulier pour fertilisation par CO2 dans l'horticulture en serre

(30) Priority: 27.11.1991 NL 9101984
(43) Date of publication of application: 22.09.1993
(73) Proprietor: N.V. ELECTRICITEITSBEDRIJF ZUID-HOLLAND, NL-2274 RJ Voorburg (NL)
(72) Inventor: Hylkema, Hette Kerst, 2264 DP, Leidschendam (NL)
(74) Representative: Boelsma, Gerben Harm, Ir.

(56) References cited:
- DE-A- 3 415 970
- DE-A- 3 915 060
- DE-A- 3 937 012
- NL-A- 8 302 861
- US-A- 4 073 089
- US-A- 4 434 613
- US-A- 4 899 544

## Description

The invention relates to a method as defined in the first part of claim 1.

In modern greenhouse horticulture it is common practise to improve plant growth by applying CO₂-fertilization, involving passing a gas containing CO₂ through the greenhouses. Individual market gardens are usually equipped with a gas-fired combustion device for the production of heat within the greenhouse and it has become common practise to pass the exhaust gases of the combustion device into and through the greenhouse to increase the CO₂ content therein. The demand for heat, however, does not always correspond with the demand for CO₂.

A method for the type above referred to is disclosed in DE-A-39 37 012, describing the principle of isolating a part of the exhaust gas flow of a gas-fired combustion device and passing the same after cooling into and through a greenhouse so as to cover the CO₂ demand. The type of combustion device has not been mentioned.

Document US-4-434 613 discloses a gasturbine/steam turbine plant for producing electricity and CO₂ and N₂ in liquid state.

Document US-4-899 544 discloses the placing of an electricity producing plant at a CO₂-consumption site, with the main purpose to satisfy the demand for CO₂ at such site, which may be an oil recovery site, a site where foods are to be refrigerated or a site for beverage carbonisation.

It is an object of the invention to provide for an economic way to cover the CO₂ demand for CO₂-fertilization in the greenhouse horticulture.

In accordance with the invention this aim is achieved by the measures defined in the second part of claim 1.

Extensive research and calculations have shown that due to 1. the increase of the CO₂-content of the isolated exhaust gases by treatment of the latter as combustion air in the auxiliary combustion device and 2. the compression of the enriched exhaust gases up to e.g. 10 bar enable CO₂-delivery from a central electricity plant to greenhouses through a distribution network of pipes of relative reduced diameter and consequently at a relatively low price.

Furthermore processes of cleaning the exhaust gases for environmental purposes can be carried out easier and more economical at a central production site than at the sites of the market gardens individually.

The invention also relates to an electricity production plant as defined in the first part of claim 4. Such a plant, having as its main purpose the production of electricity is commonly known and may be considered as disclosed in document US-A-4.434.613.

It is a further object of the invention to provide an improved electricity production plant, which can also cover the CO₂ demand for CO₂-fertilization in the greenhouse horticulture at an economically acceptable cost price. This aim is achieved by the measure as defined in the second part of claim 4.

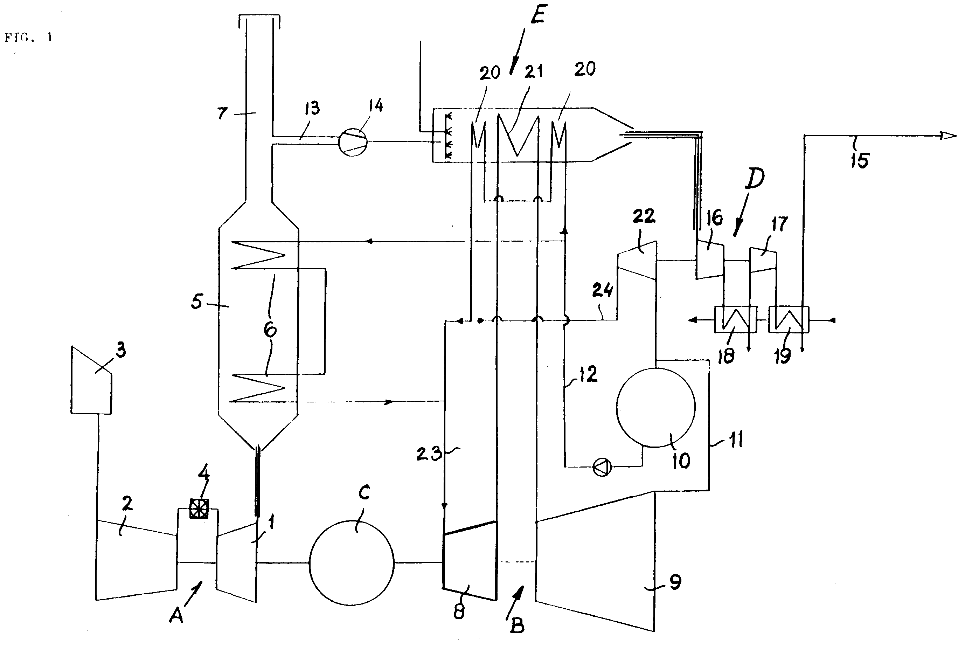

Further features of the invention will be explained below by way of example with reference to the accompanying drawing.

The drawing shows a diagram of a modern electricity production plant, which is primarily adapted for the production of electric energy (by a generator) and heat (by means of a condenser) and which is, according to the invention, further designed for delivering a gas containing CO₂.

The illustrated plant comprises an usual combination of a gas turbine unit A, a steam turbine B and an electrical generator C.

The gas turbine unit A comprises the gas turbine 1, the air compressor 2, having an air inlet 3, the combustion chamber 4, which is fired e.g. with natural gas, and the steam generating device 5, having heat exchanger bundles 6 and an exhaust pipe 7 for exhaust gasses.

The steam turbine B comprises a high pressure section 8 and a low pressure section 9, the output of which is connected to a condenser 10 by means of a pipe 11. The steam turbine B is supplied with steam, that is generated by passing the condensation water leaving the condenser 10 through pipe 12, through the heat exchanger bundle 6 in the steam generating device 5.

Sofar the plant is of a well-known concept.

According to the invention, a "branch-off pipe" 13 with a ventilator 14 is connected to the exhaust pipe 7, by which at least a part of the exhaust gasses, which otherwise would be emitted to the environment through pipe 7, can be isolated and brought into a compressed state by means of the exhaust gas compressor D for delivery into a distribution network (not shown) through a pipe line 15. The compressor D includes a low pressure stage 16 and a high pressure stage 17. Between the stages 16 and 17 and after the stage 17 the exhaust gases are passed through cooling heat exchanger bundles 18 and 19, having water separators, repectively. Within the coolers 18 and 19, the temperature of the compressed exhaust gasses can be lowered to 70° C or less, when for example water for central heating is used as a cooling medium. In this way, a part of the energy used for compressing the exhaust gasses, can be recovered.

Before the isolated exhaust gasses are supplied to the compressor D, the seperated exhaust gasses are first pretreated in an auxiliary combustion device E to increase the CO₂-content. To that end the exhaust gasses are used as combustion air in a combustion device E, adapted for firing e.g. natural gas. The combustion device E is provided with heat exchanger bundles 20 and 21. The amount of natural gas to be fired in the auxiliary combustion device E can be regulated in such a way, that the remaining amount of O₂ in the exhaust gasses will be consumed almost totally. In this way, the CO₂-content, which is normally about 3,2 vol.%, can be almost tripled. Due to the increased CO₂-content the required amount of compression energy will be substantially reduced and accordingly the costs for distribution will be correspondingly reduced.

The use of the relatively low-oxygen exhaust gasses from the steam generating device 5 as combustion air in the auxiliary combustion device E results in a lowering effect on the NOₓ-production, which is not only advantageous from an environmental-technical point of view, but also has an advantageous effect on the use as fertilization gas.

The heat produced in the auxiliary combustion device E is used for the intermediate heating of the steam in the main steam turbine B by passing the steam from the high pressure section 8 through the heat exchanger bundle 21 in the auxiliary combustion device E before supplying it to the low pressure section 9. This will increase a power of the steam turbine B accordingly. An other portion of the heat produced in the auxiliary combustion device E is used to produce additional steam, which is supplied to an auxiliary turbine 22 which drives the compressor D. The condensation water of the condenser 10, to which the output of the auxiliary steam turbine 22 is connected, is therefore passed through the heat exchanger bundles 20, which bundles are connected to the steam inlet pipe 23 and 24, to the high pressure section 8 of the main steam turbine and the auxiliary turbine 22 respectively.

## Claims

1. A method for producing a gas containing CO₂ for CO₂-fertilization in the greenhouse horticulture by making use of at least a part of the exhaust gases of a combustion device (4), characterized in that the exhaust gases are taken from an electricity production plant (A-C), in that said part of the exhaust gases is supplied to an auxiliary combustion device (E) in which the air contained in said part of the exhaust gases is consumed as combustion air and in that the exhaust gases of said auxiliary combustion device (E) are brought in a compressed and cooled state suitable for direct supply into a distribution network for CO₂-fertilization.

2. A method according to claim 1, characterized in that the exhaust gases of said auxiliary combustion device (E) are compressed to a pressure of approximately 12 bar.

3. A method according to claims 1-2, characterized in that at least a portion of the heat produced by the auxiliary combustion device (E) is used for producing steam that is used as a power source to compress said exhaust gases.

4. An electricity production plant, comprising in combination a gasturbine (A), a steam generator (5) in which the heat contained in the exhaust gases from the gasturbine (A) is used to produce steam,
a steam turbine (B) with a condenser (10) supplied with steam from said steam generator (5),
an electric generator (C) connected with said gas and steam turbines (A and B),
wherein said steam generator (5) comprises an outlet (7) for cooled exhaust gases, a branch pipe (13) in said outlet (7) and a compressor (D) connected to said branch pipe for subsequent distribution of the respective exhaust gases in a compressed state,
characterized in that an auxiliary combustion device (E) is provided in said branch pipe (13), the outlet of said auxiliary combustion device being connected to said compressor (D).

5. An electricity production plant according to claim 4, characterized in that the auxiliary combustion device (E) comprises one or more heat exchanging pipe bundles (21), which are taken up as an intermediate heating stage in the steam circuit between stages (8 and 9) of said steam turbine (B).

6. An electricity production plant according to claims 4-5, characterized in that the auxiliary combustion device (E) comprises one or more heat exchanging pipe bundles (20), which form part of the steam/condensation circuit of an auxiliary steam turbine (22) driving said compressor (D).

7. A plant according to claim 6, characterized in that the outlet (11) of the steam turbine (B) and the outlet of the auxiliary steam turbine (22) are connected to a common condensor (10).

8. A plant according to claims 4-7, characterized in that the compressor (D) is a multistage compressor, whereby in the exhaust gas connection between the stages (16, 17) and in the outlet of the last stage a heat exchanger (18; 19) is provided for cooling the exhaust gases.

## Patentansprüche

1. Verfahren zum Produzieren eines CO₂-haltigen Gases für die CO₂-Düngung im Treibhaus-Gartenbau, wobei wenigstens ein Teil der Abgase einer Verbrennungsanlage (4) verwendet werden, dadurch gekennzeichnet, dass die Abgase einem Elektrizitätswerks (A-C) entnommen werden, dass der genannte Teil der Abgase einer Hilfsverbrennungsvorrichtung (E) zugeführt wird, in der die im genannten Abgasteil enthaltene Luft als Verbrennungsluft verbraucht wird und dass die Abgase der Hilfsverbrennungsvorrichtung (E) in einen sich für die unmittelbare Aufnahme in einem Verteilernetz für CO₂-Düngung geeigenden verdichteten und gekühlten Zustand gebracht wird.

2. Verfahren nach Anspruch 1, dadurch gekennzeichnet, dass die Abgase der Hilfsverbrennungsvorrichtung (E) zu einem Druck von etwa 12 Bar verdichtet werden.

3. Verfahren nach Ansprüchen 1-2, dadurch gekennzeichnet, dass wenigstens ein Teil der von der Hilfsverbrennungsvorrichtung (E) produzierten Wärme zum Erzeugen von Dampf gebraucht wird, welcher Dampf als Kraftquelle zum Verdichten der genannten Abgase verwendet wird.

4. Elektrizitätswerk, mit einer Gasturbine (A), einem Dampferzeuger (5) in dem die in den Abgasen von der Gasturbine (A) enthaltene Wärme zum Erzeugen von Dampf verwendet wird, einer mit Dampf vom Dampferzeuger gespeissten Dampfturbine (B) mit Kondensator (10), einem mit den Gas- und Dampfturbinen (A und B) gekuppelten Stromerzeuger (C), wobei der Dampferzeuger (5) einen Auslass (7) für gekühlte Abgase, sowie eine in diesem Auslass (7) vorgesehene Zweigleitung (13) und einen an der Zweigleitung angeschlossenen Kompressor (D) für die nachfolgende Verteilung der betreffenden Abgase in verdichtetem Zustand aufweist, dadurch gekennzeichnet, dass in der genannten Zweigleitung (13) eine Hilfsverbrennungsvorrichtung (E) vorgesehen ist, deren Auslass mit dem Kompressor (O) verbunden ist.

5. Elektrizitätswerk nach Anspruch 4, dadurch gekennzeichnet, dass die Hilfsverbrennungsvorrichtung (E) eine oder mehrere wärmeaustauschende Rohrschlangen (21) aufweist, welche als eine Zwischenerhitzungsstufe im Dampfkreislauf zwischen Stufen (8 und 9) der Dampfturbine (B) aufgenommen ist (sind).

6. Elektrizitätswerk nach Ansprüchen 4-5, dadurch gekennzeichnet, dass die Hilfsverbrennungsvorrichtung (E) eine oder mehrere wärmeaustauschende Rohrschlangen (20) aufweist, welche einen Teil des Dampf/Kondensationskreislauf einer den Kompressor (D) antreibenden Hilfsdampfturbine (22) bildet (bilden).

7. Elektrizitätswerk nach Anspruch 6, dadurch gekennzeichnet, dass der Auslass (11) der Dampfturbine (B) und der Auslass der Hilfsdampfturbine (22) an einem gemeinsamen Kondensator (10) angeschlossen sind.

8. Elektrizitätzwerk nach Ansprüchen 4-7, dadurch gekennzeichnet, dass der Kompressor (D) ein Mehrstufenkompressor ist, wobei in der Abgasverbindung zwischen den Stufen (16, 17) und im Auslass der letzten Stufe ein Wärmeaustauscher (18; 19) zum Kühlen der Abgase vorgesehen ist.

## Revendications

1. Procédé pour produire un gaz contenant du CO₂ pour la fertilisation par CO₂ dans l'horticulture en serre en utilisant au moins une partie des gaz d'échappement d'un dispositif à combustion (4), caractérisé en ce que les gaz d'échappement sont prélevés depuis une installation de production d'électricité (A-C), en ce que ladite partie des gaz d'échappement est fournie à un dispositif à combustion auxiliaire (E) dans lequel l'air contenu dans ladite partie des gaz d'échappement est consommé comme de l'air de combustion, et en ce que les gaz d'échappement dudit dispositif à combustion auxiliaire (E) sont amenés dans un état refroidi et comprimé adapté pour l'alimentation directe dans un réseau de distribution pour la fertilisation par CO₂.

2. Procédé selon la revendication 1, caractérisé en ce que les gaz d'échappement dudit dispositif à combustion auxiliaire (E) sont comprimés à une pression d'approximativement 12 bars.

3. Procédé selon les revendications 1 à 2, caractérisé en ce qu'au moins une part de la chaleur produite par le dispositif à combustion auxiliaire (E) est utilisée pour produire de la vapeur qui est utilisée comme une source de puissance pour comprimer lesdits gaz d'échappement.

4. Installation de production d'électricité comprenant en combinaison une turbine à gaz (A), un générateur de vapeur (5) dans lequel la chaleur contenue dans les gaz d'échappement issus de la turbine à gaz (A) est utilisée pour produire de la vapeur, une turbine à vapeur (B) avec un condenseur (10) alimenté par de la vapeur issue dudit générateur de vapeur (5), un générateur électrique (C) relié avec lesdites turbines à gaz et à vapeur (A et B), dans lequel ledit générateur de vapeur (5) comprend une sortie (7) pour des gaz d'échappement refroidis, un tuyau de dérivation (13) dans ladite sortie (7) et un compresseur (D) relié audit tuyau de dérivation pour ensuite distribuer les gaz d'échappement respectifs dans un état comprimé, caractérisée en ce qu'un dispositif à combustion auxiliaire (E) est prévu dans ledit tuyau de dérivation (13), la sortie dudit dispositif à combustion auxiliaire étant reliée audit compresseur (D).

5. Installation de production d'électricité selon la revendication 4, caractérisée en ce que le dispositif à combustion auxiliaire (E) comprend un ou plusieurs faisceaux de tuyaux d'échange de chaleur (21) qui sont disposés comme un étage de chauffage intermédiaire dans le circuit de vapeur entre des étages (8 et 9) de ladite turbine à vapeur (B).

6. Installation de production d'électricité selon les revendications 4 à 5, caractérisée en ce que le dispositif à combustion auxiliaire (E) comprend un ou plusieurs faisceaux de tuyaux d'échange de chaleur (20) qui forment une partie du circuit de condensation/vapeur d'une turbine à vapeur auxiliaire (22) entraînant ledit compresseur (D).

7. Installation selon la revendication 6, caractérisée en ce que la sortie (11) de la turbine à vapeur (B) et la sortie de la turbine à vapeur auxiliaire (22) sont reliées à un condenseur commun (10).

8. Installation selon les revendications 4 à 7, caractérisée en ce que le compresseur (D) est un compresseur à plusieurs étages, fournissant ainsi un échangeur de chaleur (18; 19) dans la liaison de gaz d'échappement entre les étages (16,17) et dans la sortie du dernier étage pour refroidir les gaz d'échappement.
